# EUROPEAN PATENT APPLICATION

(11) **EP 4 074 599 A1**
(43) Date of publication of application: **19.10.2022**
(21) Application number: 22168472.3
(22) Date of filing: 14.04.2022
(51) Int. Cl.: B64D 11/06

(54) **AIRCRAFT INTERIOR STRUCTURE INCLUDING IMPROVED BASSINET PROVISIONS**

(30) Priority: 16.04.2021 US 202117233257
(71) Applicant: B/E Aerospace, Inc., Winston-Salem, NC 27105 (US)
(72) Inventor: DOWTY, Mark B., Rural Hall, 27045 (US); KROENER, Kent M., Cooper City, FL, 33026 (US)
(74) Representative: Dehns

(57) **Abstract**

An aircraft interior structure (102) may include a passenger seating section proximate to a passenger compartment including an aircraft seat (114). The aircraft interior structure may include a seat extension cavity (120) defined within the passenger seating section. The seat extension cavity may correspond to the aircraft seat. The aircraft interior structure may include a bassinet cavity (124) defined within the passenger seating section proximate to the seat extension cavity. The bassinet cavity may be configured to receive a bassinet (126) via an opening in the surface of the aircraft interior structure within the passenger compartment. The bassinet cavity and the bassinet may be accessible from the passenger compartment via the opening in the surface of the aircraft interior structure. The bassinet may be positioned in the bassinet cavity at a location selected to provide an unobstructed line of sight between the aircraft seat and an interior of the bassinet.

## Description

### BACKGROUND

Aircraft cabin designs may include aircraft interior structures that are separately-constructed and separately-installed within the aircraft cabin. The aircraft interior structures may be constructed with bassinet provisions that allow for the placement of a bassinet on a raised surface. In addition, the separate nature of the aircraft interior structures may result in a loss of valuable space (e.g., floor space, stowage space, or the like) within the aircraft cabin.

### SUMMARY

An aircraft interior structure is disclosed, in accordance with one or more embodiments of the disclosure. The aircraft interior structure may include a passenger seating section proximate to a passenger compartment including an aircraft seat. The aircraft interior structure may include a seat extension cavity defined within the passenger seating section. The seat extension cavity may correspond to the aircraft seat. The aircraft interior structure may include a bassinet cavity defined within the passenger seating section proximate to the seat extension cavity. The bassinet cavity may be configured to receive a bassinet via an opening in a surface of the aircraft interior structure within the passenger compartment. The bassinet cavity and the bassinet may be accessible from the passenger compartment via the opening in the surface of the aircraft interior structure. The bassinet may be positioned in the bassinet cavity at a location selected to provide an unobstructed line of sight between the aircraft seat and an interior of the bassinet.

In some embodiments, the aircraft interior structure may include a divider configured to separate the seat extension cavity and the bassinet cavity configured to receive the bassinet.

In some embodiments, the bassinet cavity may include a bottom cavity surface configured to receive the bassinet.

In some embodiments, the bottom cavity surface may be expandable and retractable to accommodate at least one of a length of the bassinet or a positioning of the bassinet within the bassinet cavity.

In some embodiments, the bassinet cavity and the bassinet may include components of at least one attachment assembly to secure the bassinet within the bassinet cavity.

In some embodiments, the bassinet cavity may be configured to stow the bassinet when the bassinet is not in use.

In some embodiments, the bassinet may be insertable within the bassinet cavity prior to use. The bassinet may be removable from the bassinet cavity when not in use.

In some embodiments, the aircraft interior structure may include at least one storage compartment. The at least one storage compartment may be located outside the passenger compartment and above the bassinet cavity and the seat extension cavity. The at least one storage compartment may be accessible via a floor area of an aircraft cabin. The aircraft cabin may include the aircraft interior structure and the passenger compartment.

In some embodiments, the aircraft interior structure may include at least one bassinet accessory may be positioned proximate to the bassinet cavity configured to receive the bassinet.

In some embodiments, the at least one bassinet accessory may include a curtain configured to cover at least one of the bassinet cavity or a portion of the bassinet located outside of the opening of the bassinet cavity.

In some embodiments, the at least one bassinet accessory including one or more visual devices installed on or within one or more surfaces of the bassinet cavity.

In some embodiments, the one or more visual devices including at least one of a light-generating device or a visual display.

In some embodiments, the at least one bassinet accessory including an aural-display installed on or within one or more surfaces of the bassinet cavity.

In some embodiments, the one or more aural devices including at least one of an anechoic material or a sound-generating device.

An aircraft cabin is disclosed, in accordance with one or more embodiments of the disclosure. The aircraft cabin may include a passenger compartment including an aircraft seat. The aircraft cabin may include an aircraft interior structure. The aircraft interior structure may include a passenger seating section proximate to the passenger compartment including the aircraft seat. The aircraft interior structure may include a seat extension cavity defined within the passenger seating section. The seat extension cavity may correspond to the aircraft seat. The aircraft interior structure may include a bassinet cavity defined within the passenger seating section proximate to the seat extension cavity. The bassinet cavity may be configured to receive a bassinet via an opening in a surface of the aircraft interior structure within the passenger compartment. The bassinet cavity and the bassinet may be accessible from the passenger compartment via the opening in the surface of the aircraft interior structure. The bassinet may be positioned in the bassinet cavity at a location selected to provide an unobstructed line of sight between the aircraft seat and an interior of the bassinet.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are examples and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 illustrates a perspective view of an aircraft cabin including a passenger compartment and an aircraft interior structure with improved bassinet provisions, in accordance with one or more embodiments of the disclosure;
FIG. 2 illustrates a perspective view of an aircraft cabin including a passenger compartment and an aircraft interior structure with improved bassinet provisions, in accordance with one or more embodiments of the disclosure;
FIG. 3 illustrates a perspective view of an aircraft cabin including a passenger compartment and an aircraft interior structure with improved bassinet provisions, in accordance with one or more embodiments of the disclosure;
FIG. 4 illustrates a perspective view of an aircraft cabin including a passenger compartment and an aircraft interior structure with improved bassinet provisions, in accordance with one or more embodiments of the disclosure;
FIG. 5A illustrates a perspective view of an aircraft cabin including a passenger compartment and an aircraft interior structure with improved bassinet provisions, in accordance with one or more embodiments of the disclosure;
FIG. 5B illustrates a perspective view of an aircraft cabin including a passenger compartment and an aircraft interior structure with improved bassinet provisions, in accordance with one or more embodiments of the disclosure;
FIG. 5C illustrates a perspective view of an aircraft cabin including a passenger compartment and an aircraft interior structure with improved bassinet provisions, in accordance with one or more embodiments of the disclosure;
FIG. 6 illustrates a perspective view of an aircraft cabin including a passenger compartment and an aircraft interior structure with improved bassinet provisions, in accordance with one or more embodiments of the disclosure;
FIG. 7 illustrates a perspective view of an aircraft cabin including a passenger compartment and an aircraft interior structure with improved bassinet provisions, in accordance with one or more embodiments of the disclosure; and
FIG. 8 illustrates a perspective view of an aircraft cabin including a passenger compartment and an aircraft interior structure with improved bassinet provisions, in accordance with one or more embodiments of the disclosure.

### DETAILED DESCRIPTION OF THE INVENTION

Reference will now be made in detail to the subject matter disclosed, which is illustrated in the accompanying drawings.

Before explaining one or more embodiments of the disclosure in detail, it is to be understood the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of or sub-combination of two or more such features, along with any other features which may not necessarily be expressly described or inherently present in the instant disclosure.

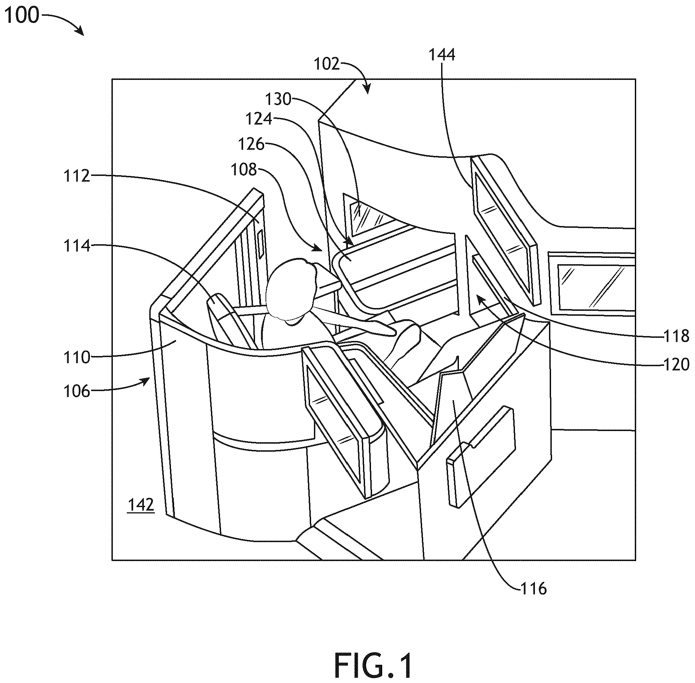

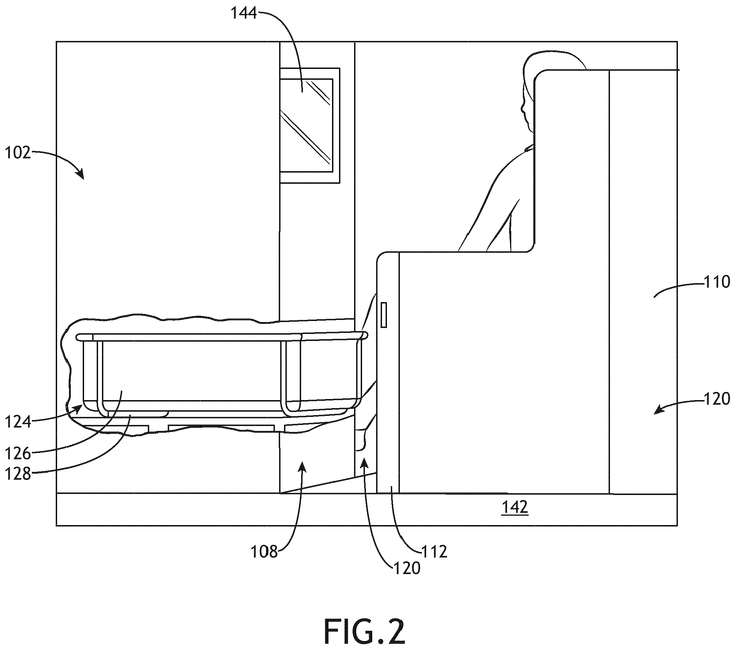

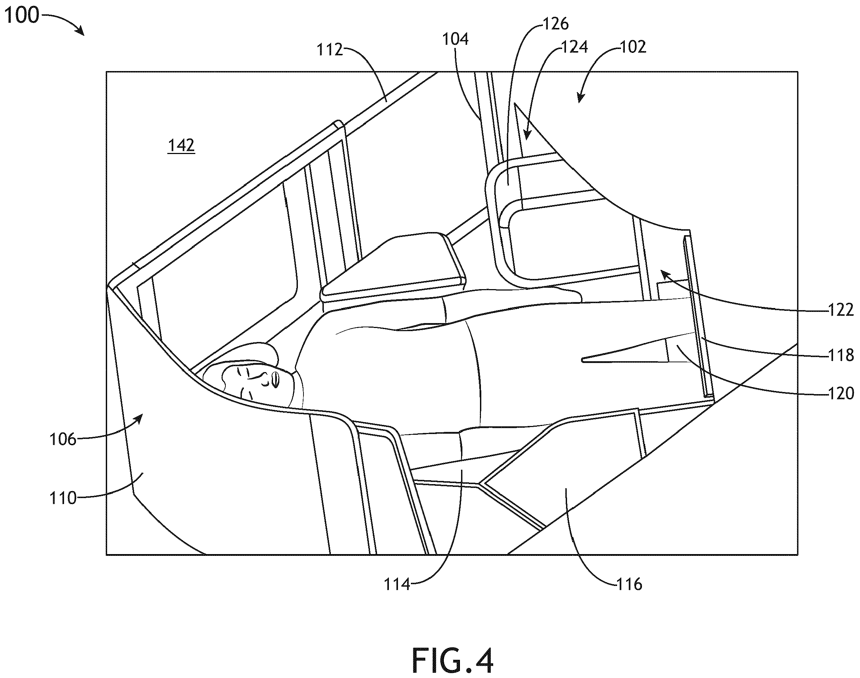

FIGS. 1-8 generally illustrate an aircraft interior structure including improved bassinet provisions, in accordance with one or more embodiments of the disclosure.

Aircraft cabin designs may include aircraft interior structures that are separately-constructed and separately-installed within the aircraft cabin. For example, the aircraft cabin may include an interior structure with one or more seat extension cavities and/or one or more seat extensions for business class or first-class passenger compartments. By way of another example, the aircraft cabin may include an interior structure configured to operate as a stowage area in which crew members or passengers may stow or retrieve items.

The aircraft interior structures may be constructed with bassinet provisions that allow for the placement of a bassinet on a raised surface. The raised surface, however, may hinder accessibility and/or visibility of an infant in the bassinet. In addition, the raised surface may offer poor ergonomics for an accompanying passenger (e.g., a parent, guardian, or the like) to view the infant in the bassinet on the raised surface. Further, the raised surface may subject the infant to loud sounds and/or bright lights originating elsewhere in the aircraft cabin. This, in turn, may subject other passengers in the aircraft cabin to the reactions to sounds from the infant.

In addition, the separate nature of the aircraft interior structures may result in a loss of valuable space (e.g., floor space, stowage space, or the like) within the aircraft cabin. However, aircraft cabin designs need to address competing interests for increased passenger seating, storage space, lavatories, galley spaces, and other structures and/or monuments. For example, arranging the layout of an aircraft cabin in order to increase passenger seating may require reducing an amount of room used for storage space, lavatories, galley spaces, and other structures and/or monuments. For instance, this reducing the amount of room used may include modifying the arrangement and/or design of components including, but not limited to, a galley, an aircraft lavatory, or other structures and/or monuments of the aircraft passenger cabin.

When modifying an aircraft cabin design to allow for bassinet provisions and a more compact arrangement, load-bearing/weight-bearing requirements must be met without losing the intended functionality of the structures and/or monuments in the aircraft cabin. For example, the structures and/or monuments in the aircraft cabin may need to be configured in accordance with aviation guidelines and/or standards put forth by, but not limited to, the Federal Aviation Administration (FAA), the European Aviation Safety Agency (EASA) or any other flight certification agency or organization; the American National Standards Institute (ANSI), Aeronautical Radio, Incorporated (ARINC), or any other standards setting organization or company; the Radio Technical Commission for Aeronautics (RTCA) or any other guidelines agency or organization; or the like.

As such, it would be beneficial to provide aircraft interior structures to be installed within the aircraft cabin with improved bassinet provisions. Embodiments of the present disclosure are directed to inserting a bassinet within a space proximate to a seat extension cavity in an aircraft interior structure. Embodiments of the present disclosure also are directed to integrating the bassinet location within the structure or monument to allow for increased accessibility and visibility of the infant, while protecting the infant from loud sounds and/or bright lights originating elsewhere in the aircraft cabin and reduce the possibility of other passengers in the aircraft cabin from hearing the responses of the infant to the loud sounds and/or bright lights. Embodiments of the present disclosure also are directed to integrating various aircraft interior components to reduce required installation space, resulting in an increase of available floor space for other aircraft interior structures, passenger compartments with aircraft seats, and/or monuments while continuing to meet aviation guidelines and/or standards.

FIGS. 1-8 in general illustrate an aircraft cabin 100 and an aircraft interior structure 102 configured for the aircraft cabin 100. It is noted herein the aircraft interior structure 102 may include a section that forms a portion of an area of the aircraft cabin 100 including, but not limited to, passenger seating (e.g., first-class, second-class, business-class, or the like), galleys, lavatories, stowage space, or the like. For example, the section of the aircraft interior structure 102 may include installed components and/or may be configured to receive or stow components associated with passenger seating, galleys, lavatories, stowage space, or the like. For instance, the section of the aircraft interior structure 102 may include installed components and/or may be configured to receive or stow components including, but not limited to, galley carts, galley inserts (e.g., brewing apparatuses, chillers, ovens, unit containers, or the like), auxiliary aircraft accessories configured to be installed within the aircraft cabin 100 at the request of a passenger (e.g., bassinets, tray tables, or the like), crew member luggage, oversized passenger luggage (e.g., wheelchairs, strollers, car seats, or the like)), fixtures (e.g., plumbing fixtures, light fixtures, power fixtures, or the like), or some combination of the above.

The aircraft interior structure 102 may be configured as a front row monument for the aircraft cabin 100. It is noted herein, however, that the aircraft interior structure 102 being configured as a front row monument is not limiting, and that the aircraft interior structure 102 may be placed at other locations within the aircraft cabin 100.

The aircraft interior structure 102 may include one or more support structures 104. For example, the one or more support structures 104 may include, but are not limited to, one or more frames, one or more sub-frames, one or more interior or exterior decor panels, or the like.

The aircraft interior structure 102 may be positioned within the aircraft cabin 100 proximate to one or more passenger compartments 106. The aircraft interior structure 102 may include a passenger seating section 108 which forms and/or includes components of the one or more passenger compartments 106. For example, the one or more passenger compartments 106 may be entirely separate (e.g., fully separated by privacy panels or divider panels). By way of another example, adjacent passenger compartments 106 may occupy a shared portion of the floor area of the aircraft cabin 100.

A passenger compartment 106 may include a privacy shell 110 with one or more privacy shell elements. The privacy shell 110 may include an opening within the one or more privacy shell elements into the passenger compartment 106, the opening configured to lead to an aircraft aisle of the aircraft cabin 100. The passenger compartment 106 may include a door 112 for the opening. For example, the door 112 may swing or slide into an open position against the one or more privacy shell elements. For instance, the door 112 may slide into an open position against a surface of the one or more privacy shell elements inside the passenger compartment 106. By way of another example, one or more privacy shell elements may be at least partially hollow, and the door 112 may be slid into a door cavity defined in the one or more privacy shell elements.

A passenger compartment 106 may include one or more aircraft seats 114 (e.g., business class or first-class passenger seats) positioned proximate to the aircraft interior structure 102. It noted herein the terms "aircraft seats" and "passenger seats" may be considered equivalent, for purposes of the disclosure.

In general, an aircraft seat 114 may be translatable (e.g., trackable or slidable). The aircraft seat 114 may be rotatable about an axis cross-wise through the aircraft seat 114 into a position including, but not limited to, an upright or raised position, one or more lounge or reclined positions, and a lie-flat or bed position. For example, the aircraft seat 114 may transition directly between the upright position and the lie-flat or bed position. By way of another example, it is noted herein the aircraft seat 114 may transition through one or more reclined positions between the upright or raised position and the lie-flat or bed position. By way of another example, the aircraft seat 114 may transition into one or more reclined positions in a motion separate from the transition between the upright position and the lie-flat or bed position. Therefore, the above description should not be interpreted as a limitation on the scope of the disclosure but merely an illustration.

The aircraft seat 114 may be rotatable about an axis (e.g., swivelable). The aircraft seat 114 may be fully positionable between the outer limits of motion as defined by the moveable components of the aircraft seat 114, one or more primary monuments 116, and/or one or more auxiliary monuments 118 of the passenger compartment 106. It is noted herein an upright or raised position may be considered a taxi, takeoff, or landing (TTOL) position during select stages of flight (though the upright or raised position is not limited to use during the select stages of flight as the TTOL position, but also may be used at any point during the flight), for purposes of the present disclosure. In addition, it is noted herein that any position that does not meet the above-defined requirements of the TTOL position may be considered a non-TTOL position, for purposes of the present disclosure. Further, it is noted herein the aircraft seat 114 may be actuatable (e.g., translatable and/or rotatable) from the TTOL position to a non-TTOL position, and/or vice versa. Further, it is noted herein the aircraft seat 114 may be capable of a fully upright or raised position, and that the TTOL position may have a more reclined seat back cushion and a more angled upward seat pan cushion as compared to the fully upright or raised position. Therefore, the above description should not be interpreted as a limitation on the present disclosure but merely an illustration.

The aircraft seat 114 may be configured to avoid contact with the one or more primary monuments 116 when transitioning between positions (e.g., between the upright or raised position and the lie-flat or bed position). The one or more primary monuments 116 may include or may be implemented as a divider panel or structure separating adjacent passenger compartments 106 and/or between a passenger compartment 106 from an open area within the aircraft cabin 100. For example, where the one or more primary monuments 116 are implemented as separators, the one or more primary monuments 116 may be configured to allow for the multiple passenger compartments 106 to be installed within the aircraft cabin 100 in a more compact arrangement. In this regard, the amount of floor area of the aircraft cabin 100 necessary for the one or more aircraft seats 114 may be reduced.

The one or more auxiliary monuments 118 may include, but are not limited to, a tray or table, a side stand, or the like. The aircraft seat 114 may be configured to avoid contact with the one or more auxiliary monuments 118 when transitioning between positions (e.g., between the upright or raised position and the lie-flat or bed position).

The auxiliary monument 118 may include a top surface, a bottom surface, and/or one or more side surfaces. For example, the auxiliary monument 118 may include a single continuous side surface where all corners are rounded. By way of another example, the auxiliary monument 118 may include up to an N number of side surfaces where the auxiliary monument 118 includes up to an N number of corners. The auxiliary monument 118 may be fixed in position. It is noted herein, however, that the auxiliary monument 118 may be actuatable (e.g., may extend a select distance from a stored position to an extended position proximate to a passenger, similar to an aircraft tray table).

The auxiliary monument 118 may be proximate to a different primary monument 116 used as a separator between adjacent passenger compartments 106 and/or between a passenger compartment 106 and an open area within the aircraft cabin 100. For example, the auxiliary monument 118 may be positioned above a primary monument 116. The auxiliary monument 118 may be integrated into the primary monument 116 used as a separator between adjacent aircraft seats 114 and/or between an aircraft seat 114 and an open area within the aircraft cabin 100. In this regard, the amount of floor area of the aircraft cabin 100 necessary for the one or more aircraft seats 114 may be reduced.

It is noted herein that at least some components (e.g., at least a portion of the privacy shell 110, a primary monument 116, an auxiliary monument 118, or the like) may conform to a portion of an aircraft seat 114. In this regard, the amount of floor area of the aircraft cabin 100 necessary for the one or more aircraft seats 114 may be reduced.

The passenger seating section 108 may include one or more seat extension cavities 120 configured to be usable by one or more passengers in one or more aircraft seats 114 positioned proximate to the aircraft interior structure 102. The passenger seating section 108 may include one or more seat extensions 122 positioned within the one or more seat extension cavities 120. For example, the one or more seat extensions 122 may be fixed in place. By way of another example, the one or more seat extensions 122 may be configured to transition between a first position and at least a second position. For instance, at least a portion of a seat extension 122 may be configured to translate, may be configured to rotate about an axis, or may be configured to translate and rotate about an axis.

One or more dimensions of the seat extension cavity 120 may be changed by transitioning the aircraft seat 114 between the upright or raised position, a lounge or reclined position, and the lie-flat or bed position. It is noted herein that a portion of the seat extension 122 may be actuatable (e.g., along a set of tracks or linear rails) to a position outside of the seat extension cavity 120.

The seat extension 122 may be configured to translate and/or rotate about an axis through a sidewall of the seat extension 122 to point a top surface to a passenger occupying the aircraft seat 114. For example, where the seat extension 122 may be configured to both translate and rotate, the seat extension 122 may be configured to independently rotate and/or translate. By way of another example, where the seat extension 122 may be configured to both translate and rotate, a rotation may prevent further translation until the seat extension 122 is returned to a select position and/or a translation may prevent further rotation until the seat extension 122 is returned to a select position.

It is noted herein, however, the aircraft seat 114 and/or the seat extension 122 may be limited to an upright or raised position and/or one or more lounge or reclined positions. In addition, it is noted herein the aircraft seat 114 may be the sole component forming a bed when the aircraft seat 114 is in a lie-flat or bed position. Therefore, the above description should not be interpreted as a limitation on the present disclosure but merely an illustration.

The passenger seating section 108 may include one or more defined bassinet cavities 124 within a main body of the aircraft interior structure 102. For example, a bassinet cavity 124 may be defined within the aircraft interior structure 102 proximate to a seat extension cavity 120. For instance, the bassinet cavity 124 and the seat extension cavity 120 may be separated by a divider of the aircraft interior structure 102, such that the bassinet cavity 124 and the seat extension cavity 120 are different spaces. In addition, the bassinet cavity 124 and the seat extension cavity 120 may share one space within the aircraft interior structure 102.

The one or more bassinet cavities 124 may be configured to receive a bassinet 126 via an opening within a surface of the aircraft interior structure 102 within the passenger compartment 106 (e.g., including, but not limited to, facing the aircraft seat 114). The bassinet cavity 124 may be dimensioned to receive all or a portion of the bassinet 126 (e.g., enough of the bassinet 126 such that the bassinet 126 is supported by one or more surfaces 128 defining the bassinet cavity 124 and/or by bassinet-mounting accessories. For example, a surface 128 may be configured to support a bassinet 126 within a bassinet cavity 124. For example, the surface 128 may be rigid and configured to receive the bassinet 126. By way of another example, the surface 128 may be expandable and/or retractable to accommodate the length of the bassinet 126, assist in the installation and/or positioning of the bassinet 126 within the bassinet cavity 124, or the like.

The seat extension 122 may be usable by a passenger in an aircraft seat 114 positioned proximate to the aircraft interior structure 102 when the corresponding aircraft seat 114 is in a lie-flat or bed position. For example, the seat extension 122 may form a portion of a bed surface when the corresponding aircraft seat 114 is in the lie-flat or bed position. For instance, the passenger may rest on the aircraft seat 114 and the seat extension 122 when in the lie-flat or bed position with their head at or near the top of the aircraft seat 114 and their feet on the seat extension 122. In addition, the passenger may rest on the aircraft seat 114 and the seat extension 122 when in the lie-flat or bed position with their feet at or near the top of the aircraft seat 114 and their head on the seat extension 122. In this instance, the head of a passenger accompanying an infant may be adjacent to the bassinet 126 in the bassinet cavity 124, to allow for an improved or unobstructed line of sight between the infant and the accompanying passenger. It is noted herein the divider between the seat extension cavity 120 and the bassinet cavity 124 may or may not be removed from the aircraft interior structure 102 (e.g., depending on an amount of visibility to be afforded between the infant in the bassinet 126 and the accompanying passenger).

The seat extension 122 may be usable by a passenger in an aircraft seat 114 positioned proximate to the aircraft interior structure 102 when the corresponding aircraft seat 114 is in a reclined or lounge position. The seat extension 122 may be usable by a passenger in an aircraft seat 114 positioned proximate to the aircraft interior structure 102 when the corresponding aircraft seat 114 is in an upright or raised position.

The bassinet 126 may be inserted into the bassinet cavity 124 and removed to be stowed in another location within the aircraft cabin 100. The bassinet 126 may be stowed within the bassinet cavity 124 (e.g., in an expanded form or in a collapsible form).

The aircraft interior structure 102 may include one or more bassinet-mounting or attachment assemblies configured to hold or secure the bassinet 126 within the bassinet cavity 124 and on (or proximate to) the surface 128, to meet aviation guidelines and/or standards (e.g., for use during select stages of flight). For example, the aircraft interior structure 102 may include one or more bars or linkages configured to couple to components of the aircraft interior structure 102 (e.g., on the surface 128 or walls of the bassinet cavity 124) and the bassinet 126, one or more interlocking assemblies (e.g., one or more tab- and-groove assemblies, or the like) with components of the aircraft interior structure 102 (e.g., on the surface 128 or walls of the bassinet cavity 124) and the bassinet 126, one or more raised surfaces (e.g., bumps or lips on surface 128 within the one or more bassinet cavities 124, one or more doors covering the bassinet cavity 124, or the like.

It is noted herein the placement of the bassinet 126 within the bassinet cavity 124 proximate to the seat extension cavity 120 may improve infant visibility and accessibility within the bassinet 126 (e.g., improve visibility of the interior of the bassinet 126) by the accompanying passenger, while also accommodating the infant by making the infant more comfortable. In general, the aircraft interior structure 102 and the passenger compartment 106 may be positioned at a select location such that an unbroken or unobstructed line of sight exists between the bassinet 126 (e.g., including, but not limited to, an interior of the bassinet) and the aircraft seat 114.

The bassinet 126 may be at a height within the passenger seating section 108 of the aircraft interior structure 102 that is less than an eye height of an accompanying passenger occupying the passenger compartment 106 and located within the aircraft seat 114 (e.g., the eye height including, but not limited to, a seated eye height or a bed eye height for the accompanying passenger).

For example, the placement of the bassinet 126 within the bassinet cavity 124 proximate to the seat extension cavity 120 may allow a passenger in the aircraft seat 114 to see the infant while in a seated position (e.g., an upright or a lounge position) or in a lie-flat or bed position. For instance, the opening of the bassinet 126 may be at bed height, being approximately equal in height from the floor of the aircraft cabin 100 as the cushion surface of the aircraft seat 114 when the aircraft seat 114 is in the lie-flat or bed position.

By way of another example, the placement of the bassinet 126 within the bassinet cavity 124 proximate to the seat extension cavity 120 may protect the infant within the confines of the privacy shell 110 of the passenger compartment 106. (e.g., in contrast to if the bassinet 126 were placed on the aircraft interior structure 102).

By way of another example, the placement of the bassinet 126 within the bassinet cavity 124 proximate to the seat extension cavity 120 may be of greater ergonomic benefit (e.g., in terms of ease or difficulty of reach) for the accompanying passenger, where the passenger is of shorter stature.

By way of another example, the placement of the bassinet 126 within the bassinet cavity 124 proximate to the seat extension cavity 120 may reduce the loud sounds and/or bright lights originating elsewhere in the aircraft cabin to which the infant may be subjected. This, in turn, may prevent other passengers in the aircraft cabin 100 from being subjected to the reactions to sounds from the infant.

In this regard, the positioning of the bassinet 126 within the bassinet cavity 124 is improved when compared to, for example, the bassinet 126 being positioned on top of the aircraft interior structure 102, which may put the bassinet 126 at a height where an accompanying passenger cannot easily see into the bassinet 126 to check on the infant.

The bassinet 126 may be solid or flexible (e.g., to an extent the bassinet 126 is still capable of supporting an infant). For example, the bassinet 126 may be a solid structure with rigid sides and bottom. By way of another example, the bassinet 126 may be a collapsible structure fabricated from a frame and a foldable material (e.g., fabric, or the like). It is noted herein the bassinet cavity 124 may be padded (e.g., at least the surface 128), and/or a mattress may be obtained from a crew member (or located within the bassinet cavity 124) and used in place of the bassinet 126 to similar effect.

The bassinet 126 may be paired with one or more bassinet accessories of the aircraft interior structure 102.

For example, the passenger compartment 106 may include a mirror 130 within or positioned proximate to the bassinet cavity 124, the mirror 130 configured to generate an additional line of sight between the aircraft seat 114 and the interior of the bassinet 126 based on the positioning of the bassinet 126 within the bassinet cavity 124. For instance, the accompanying passenger may be able to see the bassinet 126 (and the infant inside) via the mirror 130, creating one or another unobstructed line of sight between the bassinet 126 and the aircraft seat 114 whether the accompanying passenger is in a seated position, a lounge position, or a lie-flat position.

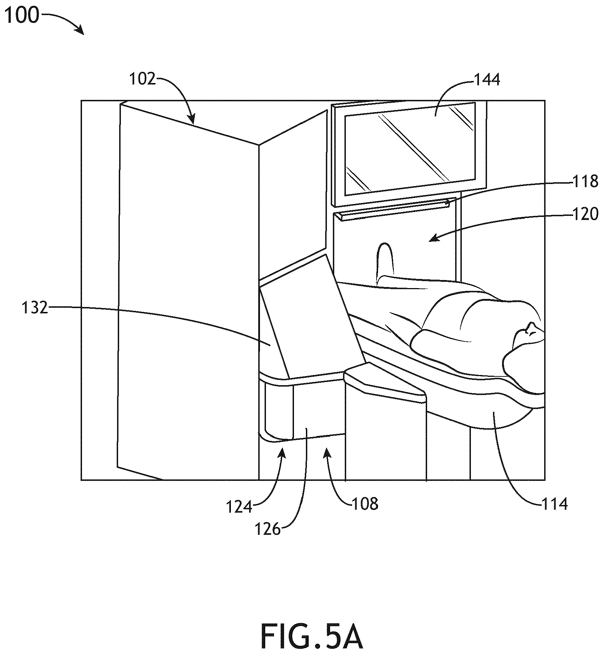

By way of another example, as illustrated in FIG. 5A, the passenger compartment 106 may include a curtain or shield 132 configured to cover the bassinet cavity 124 and/or a portion of the bassinet 126 located outside the opening of the bassinet cavity 124. The curtain or shield 132 may be removable and installable as requested by the accompanying passenger. For example, the curtain or shield 132 may be removed to be stowed in another location within the aircraft cabin 100, or may be stowed within the bassinet cavity 124 (e.g., in an expanded form or in a collapsible form). The curtain or shield 132 may be affixed to the aircraft interior structure 102 and actuated between a stowed position and a deployed position. For example, the curtain or shield 132 may be stowed against the aircraft interior structure 102, within the bassinet cavity 124, or the like.

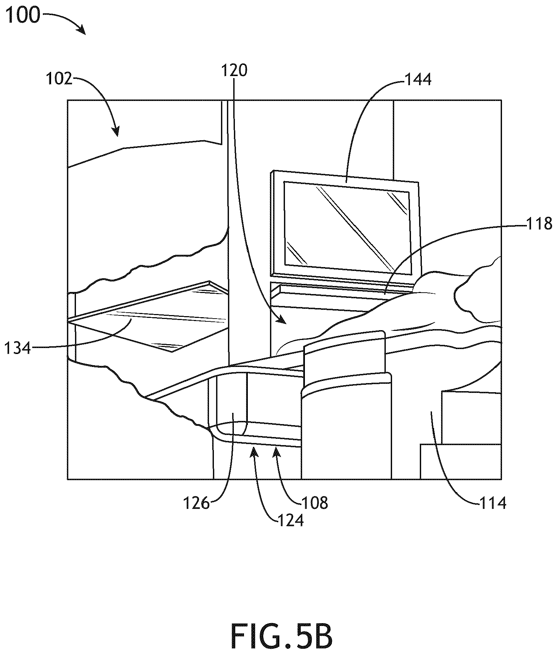

By way of another example, as illustrated in FIG. 5B, the bassinet cavity 124 may include one or more visual devices 134 installed on or within one or more surfaces of the bassinet cavity 124. The one or more visual devices 134 may include, but are not limited to, light-generating devices and/or visual displays. The one or more lights or visual displays may be configured to illuminate the bassinet cavity 124 with one or more colors that calms an infant and/or helps the infant to sleep in the bassinet 126. For example, the one or more colors may include purple, blues, earth tones, (e.g., browns, greens, natural colors), or the like to calm the infant and/or help the infant to sleep in the bassinet 126. The or more lights or visual displays may be configured to display media for the infant in the bassinet 126 including, but not limited to, still images (e.g., of a parent or guardian, fictional characters, or the like), videos (e.g., cartoons, or the like), or other media selected to calm the infant and/or help the infant to sleep in the bassinet 126.

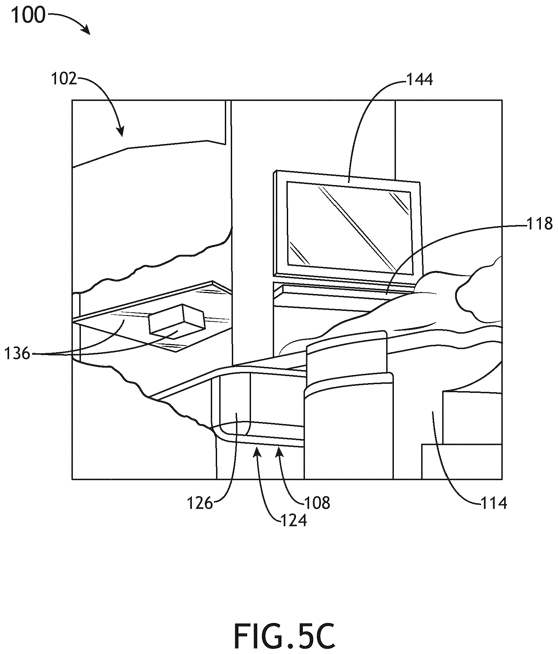

By way of another example, as illustrated in FIG. 5C, the bassinet cavity 124 may include one or more aural devices 136 installed on or within one or more surfaces of the bassinet cavity 124 to calm the infant and/or help the infant to sleep in the bassinet 126. The one or more aural devices 136 may include, but are not limited to, an anechoic material lining the interior of the bassinet cavity 124 to deaden any noise that may enter the bassinet cavity 124 prior to exterior noise reaching the infant (e.g., from the aircraft cabin 100, from passengers within the aircraft cabin 100, or the like) and/or deaden any noise from the infant that may exit the bassinet cavity 124. The one or more aural devices 136 may include, but are not limited to, a speaker or other sound-generating device configured to generate sounds including, but not limited to, sounds of an individual or individuals (e.g., of a parent or guardian, fictional characters, or the like), sounds of a video (e.g., cartoons, or the like), sound with same amplitude but inverted phase (or antiphase) of exterior noise (e.g., from the aircraft cabin 100, from passengers within the aircraft cabin 100, or the like) to destructively interfere with the exterior noise for active noise cancellation, or the like.

It is noted herein the placement of the bassinet within the bassinet cavity 124 proximate to the seat extension cavity 120 may open the area above the aircraft interior structure 102 for additional monuments or structures, either integrated or coupled. The aircraft interior structure 102 may have a partial height at the passenger seating section 108. The space above the passenger seating section 108 may be open. For example, the space above the passenger seating section 108 may include interior or exterior decor panels, shelving units without doors, storage compartments with doors, and/or in-flight entertainment (IFE) devices proximate to the passenger seating section 108.

By way of another example, the aircraft interior structure 102 may include one or more surfaces. For example, the one or more surfaces may include, but are not limited to, a countertop, a work surface, or other surface accessible by passengers or crew members. For instance, the surface may include one or more tiers, where each tier is a select shape.

By way of another example, the aircraft interior structure 102 may include one or more storage compartments 138. The one or more storage compartments 138 may be positioned proximate to or integrated into the aircraft interior structure 102 (e.g., above the passenger seating section 108 with the seat extension cavities 120), within the one or more privacy shell elements of the privacy shell 110, the one or more primary monuments 116, the one or more auxiliary monuments 118, or the like. The one or more storage compartments 138 may be coupled to and/or at least be partially inset in the aircraft interior structure 102 (e.g., above the passenger seating section 108 with the seat extension cavities 120), the one or more privacy shell elements of the privacy shell 110, the one or more primary monuments 116, the one or more auxiliary monuments 118, or the like. It is noted herein the bassinet cavity 124 may be used as a storage compartment 138 if the bassinet 126 is stowed (e.g., removed or collapsed).

The one or more storage compartments 138 may include a door 140. It is noted herein, however, that the one or more storage compartments 138 may be similar to a shelving unit without doors. In addition, it is noted herein that the one or more storage compartments 138 may include one or more racks. The one or more storage compartments 138 may be accessible from an aisle 142 proximate to the passenger compartments 106, from the passenger compartments 106, and/or from an area in the aircraft cabin 100 proximate to the passenger compartments 106.

A storage compartment 138 may be a storage compartment (e.g., a wardrobe) configured to receive long and/or large items (e.g., passenger amenities needing to be hung, carry-on luggage, or the like) that require an increased space and/or that a passenger may prefer to store in a substantially vertical or upright orientation.

A storage compartment 138 may be configured to receive and hold (e.g., contain, secure, or the like) one or more passenger amenities including, but not limited to, paper-printed materials (e.g., magazines, newspapers, pamphlets, or the like), select personal electronic devices (e.g., phones, tablets, phablets, laptops, music devices, digital video disc (DVD) players, handheld gaming consoles or devices, or the like), food products, drink products, or the like.

A storage compartment 138 may include one or more electronic connections for one or more passenger amenities such as, but not limited to, one or more charging ports, one or more charging cables, or the like.

A storage compartment 138 may include one or more electronic connections in communication with one or more components of the passenger compartment 106 such as, but not limited to, one or more display device connection ports, one or more display device connection cables, one or more audio output jacks (e.g., headphone jacks), one or more audio input jacks, or the like.

A storage compartment 138 may include one or more safety devices (e.g., air masks, personal floatation devices, or the like).

The passenger compartment 106 may include one or more accessories 144 (e.g., electronics or electronic devices) configured to provide a visual and/or auditory output to passengers within the passenger compartment 106. For example, the one or more accessories may include, but are not limited to, one or more lights or lighted panels, one or more aircraft seat 114 actuation devices (e.g., assemblies, controls, actuators, and/or the like), one or more IFE devices 144, one or more speakers configured to provide media content separate from or accompanying the media content shown on the IFE devices 144, or the like.

The passenger seating section 108 of the passenger compartment 106 may be within a portion of the aircraft interior structure 102 that is integrated with the rest of the aircraft interior structure 102 (e.g., is fabricated as a single unit). It is noted herein, however, the passenger seating section 108 of the passenger compartment 106 may be within a portion of the aircraft interior structure 102 that is a fagade coupled to an exterior surface of the aircraft interior structure 102. For example, the façade may include the seat extension cavity 120, the seat extension 122, and the bassinet cavity 124. Where the façade includes the passenger seating section 108, the aircraft interior structure 102 may include a façade cavity into which a surface of the façade conforming to the exterior of the seat extension cavity 120 and/or the bassinet cavity 124 may be inserted.

The aircraft seats 114 may be set in a herringbone or reverse herringbone configuration at an angle relative to a floor area 142 (e.g., where the floor area 142 is the aircraft aisle 142) and relative to the aircraft interior structure 102. For example, the aircraft seats 114 may be positioned proximate to the floor area 142 (e.g., the aircraft seats 114 may be separated by some distance), while the seat extension cavities 120 corresponding to the aircraft seats 114 may be positioned proximate to one another (e.g., either may be separated or shared). By way of another example, the aircraft seats 114 may be positioned proximate to one another (e.g., either may be separated or shared), while the seat extension cavities 120 corresponding to the aircraft seats 114 may be positioned proximate to the floor area 142 (e.g., the seat extension cavities 120 may be separated by some distance).

The aircraft seats 114 may be parallel to the floor area 142 (e.g., where the floor area 142 is an aircraft aisle 160) and directly face the aircraft interior structure 102. For example, the aircraft seats 114 may be positioned proximate to one another (e.g., are center seats separated from the floor area 142 by some distance). For instance, portions of the passenger seating section 108 (e.g., the one or more seat extension cavities 120 and/or the one or more seat extensions 122) corresponding to the aircraft seats 114 may be centered within the passenger seating section 108 of the aircraft interior structure 102 and positioned proximate to one another (e.g., either are in a separated space or are in a shared space). By way of another example, the aircraft seats 114 may be positioned proximate to the floor area 142 (e.g., are separated by some distance). For instance, the seat extension cavities 120 corresponding to the aircraft seats 114 may be separated by some distance and proximate to one or more exterior or outer support structures 106 of the aircraft interior structure 102. By way of another example, an aircraft seat 114 may be positioned near a center line of adjacent passenger compartments 106 and a second aircraft seat 114 may be positioned proximate to the floor area 142 (e.g., where the floor area 142 is an aircraft aisle 160), such that the aircraft seats 114 (and the passenger compartments 106) are not positioned symmetrically within the aircraft cabin 100.

In general, it is noted herein the one or more passenger compartments 106 including the bassinet cavity 124 and the bassinet 126 may be arranged in a slanted, forward-facing, rearward-facing configuration, or any configuration of passenger compartments 106 and aircraft seats 114.

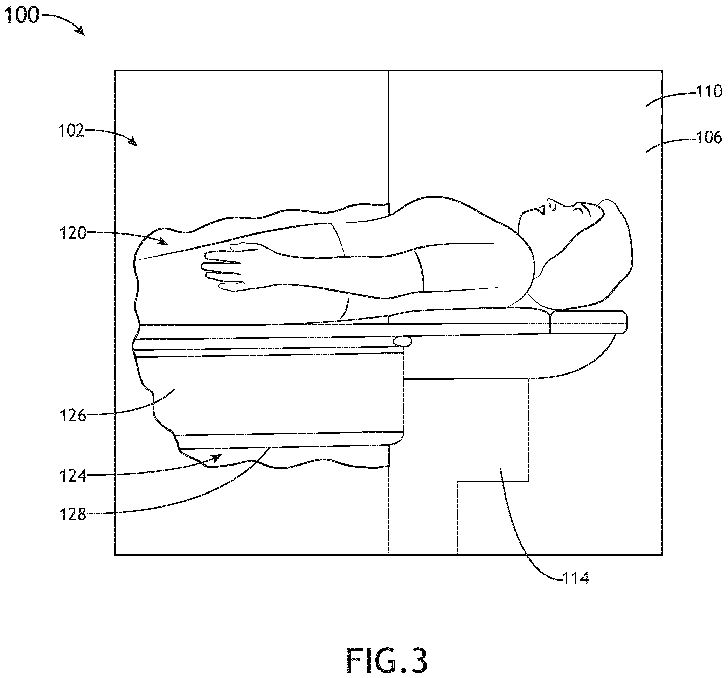

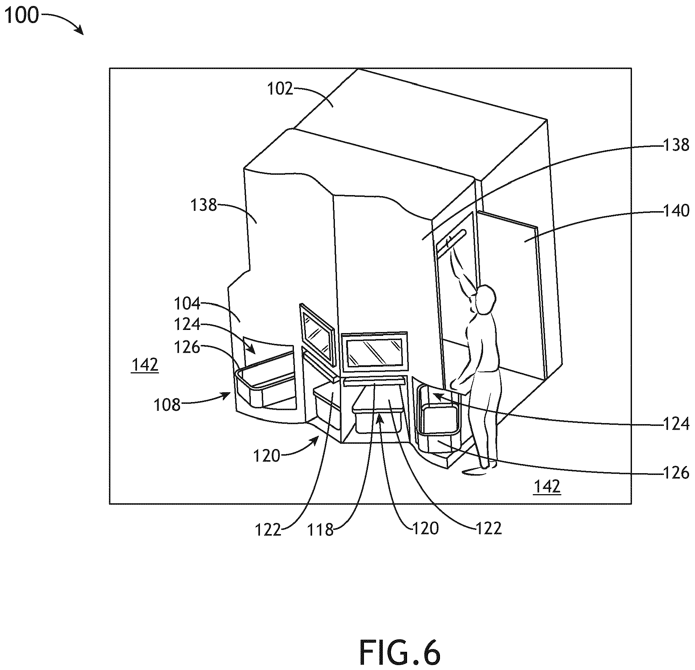

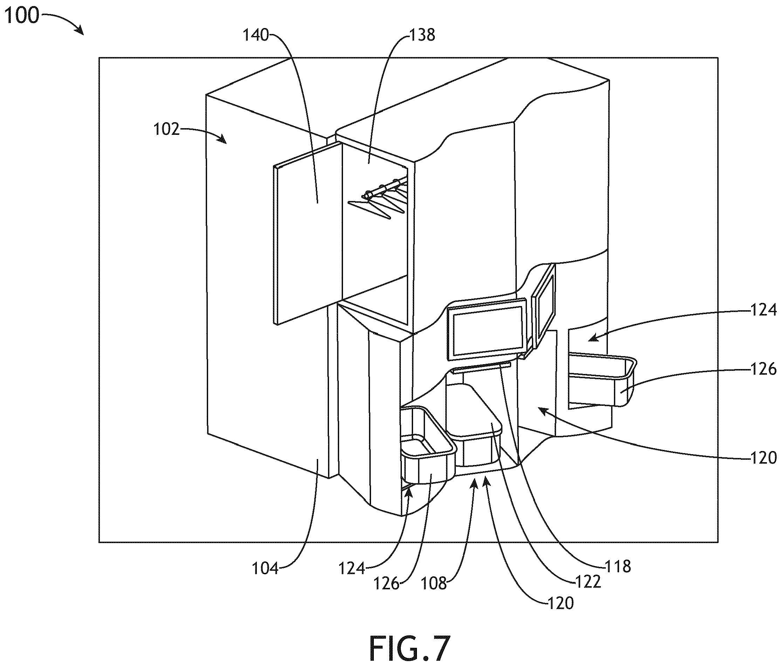

It is noted herein the privacy shell 110 is removed from FIGS. 3, 5A-5C, and 7 for purposes of clarity. In addition, it is noted herein the aircraft seat 114 is removed from FIGS. 6 and 7 for purposes of clarity.

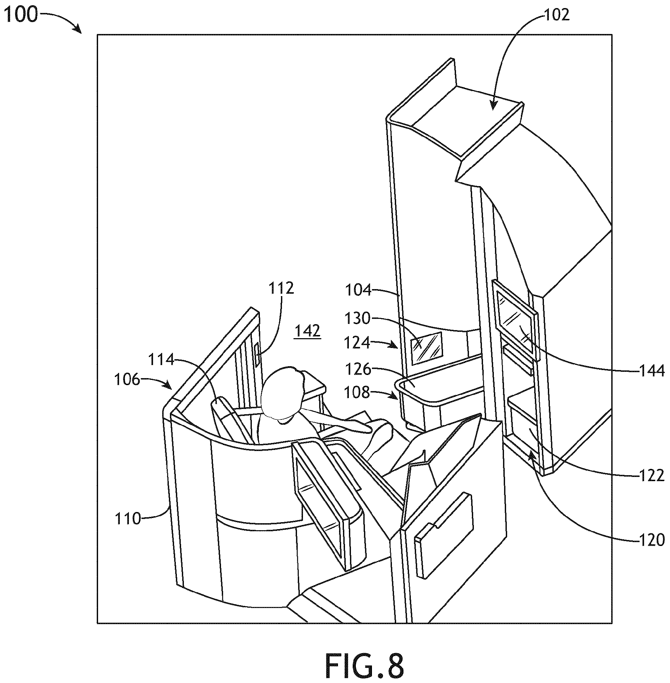

Although embodiments of the present disclosure illustrate the aircraft interior structure 102 and the passenger compartment 106 as being within inboard configuration, it is noted herein the aircraft interior structure 102 and the passenger compartment 106 may be components in an outboard configuration. FIG. 8 illustrates an aircraft interior structure 102 and a passenger compartment 106 in an outboard configuration.

In this regard, the placement of the bassinet 126 within the bassinet cavity 124 may reduce the combined area required for the footprints of the passenger seating section 108 and a section for the bassinet of the aircraft interior structure 102, as compared to if the sections were separately-constructed for and/or separately-installed within the aircraft cabin 100. The aircraft interior structure 102 may be installed at locations within an aircraft cabin 100 to allow for additional improvement in the monument or structure layout within the aircraft cabin 100 (e.g., additional stowage, an additional row of passenger compartments 106 and/or aircraft seats 114, or the like).

Advantages of the present disclosure include an aircraft interior structure 102 to be installed within the aircraft cabin 100 with improved bassinet provisions. Advantages of the present disclosure also include inserting a bassinet 126 within a bassinet cavity 124 proximate to a seat extension cavity 120 in the aircraft interior structure 102.

Advantages of the present disclosure also include integrating the bassinet 126 location within the aircraft interior structure 102 to allow for increased accessibility and visibility of the infant, while protecting the infant from loud sounds and/or bright lights originating elsewhere in the aircraft cabin 100 and reduce the possibility of other passengers in the aircraft cabin 100 from hearing the responses of the infant to the loud sounds and/or bright lights. Advantages of the present disclosure also include integrating various aircraft interior components to reduce required installation space, resulting in an increase of available floor space for other aircraft interior structures 102, passenger compartments 106 with aircraft seats 114, and/or monuments 116, 118 while continuing to meet aviation guidelines and/or standards.

Although embodiments of the disclosure are directed to an aviation environment such as an aircraft cabin 100, it is noted herein the aircraft interior structure 102 including improved bassinet provisions is not limited to the aviation environment and/or the aircraft components within the aviation environment. For example, the aircraft interior structure 102 including improved bassinet provisions may be configured for any type of vehicle known in the art. For example, the vehicle may be any air, space, land, or water-based personal equipment or vehicle; any air, space, land, or water-based commercial equipment or vehicle; any air, space, land, or water-based military equipment or vehicle known in the art. By way of another example, the aircraft interior structure 102 including improved bassinet provisions may be configured for commercial or industrial use in either a home or a business. Therefore, the above description should not be interpreted as a limitation on the present disclosure but merely an illustration.

Although the disclosure has been described with reference to the embodiments illustrated in the attached drawing figures, equivalents may be employed and substitutions made herein without departing from the scope of the claims. Components illustrated and described herein are merely examples of a system/device and components that may be used to implement embodiments of the disclosure and may be replaced with other devices and components without departing from the scope of the claims. Furthermore, any dimensions, degrees, and/or numerical ranges provided herein are to be understood as non-limiting examples unless otherwise specified in the claims.

## Claims

1. An aircraft interior structure (102), comprising:
a passenger seating section proximate to a passenger compartment including an aircraft seat (114);
a seat extension cavity (120) defined within the passenger seating section, the seat extension cavity corresponding to the aircraft seat; and
a bassinet cavity (124) defined within the passenger seating section proximate to the seat extension cavity, the bassinet cavity configured to receive a bassinet (126) via an opening in a surface of the aircraft interior structure within the passenger compartment, the bassinet cavity and the bassinet being accessible from the passenger compartment via the opening in the surface of the aircraft interior structure, the bassinet being positioned in the bassinet cavity at a location selected to provide an unobstructed line of sight between the aircraft seat and an interior of the bassinet.

2. The aircraft interior structure of Claim 1, further comprising:
a divider configured to separate the seat extension cavity and the bassinet cavity configured to receive the bassinet.

3. The aircraft interior structure of Claim 1 or 2, the bassinet cavity including a bottom cavity surface configured to receive the bassinet.

4. The aircraft interior structure of Claim 3, the bottom cavity surface being expandable and retractable to accommodate at least one of a length of the bassinet or a positioning of the bassinet within the bassinet cavity.

5. The aircraft interior structure of any preceding Claim, the bassinet cavity and the bassinet including components of at least one attachment assembly to secure the bassinet within the bassinet cavity.

6. The aircraft interior structure of any preceding Claim, the bassinet cavity configured to stow the bassinet when the bassinet is not in use.

7. The aircraft interior structure of any preceding Claim, the bassinet being insertable within the bassinet cavity prior to use, the bassinet being removable from the bassinet cavity when not in use.

8. The aircraft interior structure of any preceding Claim, further comprising:
at least one storage compartment, the at least one storage compartment being located outside the passenger compartment and above the bassinet cavity and the seat extension cavity, the at least one storage compartment being accessible via a floor area of an aircraft cabin, the aircraft cabin including the aircraft interior structure and the passenger compartment.

9. The aircraft interior structure of any preceding Claim, further comprising:
at least one bassinet accessory positioned proximate to the bassinet cavity configured to receive the bassinet.

10. The aircraft interior structure of Claim 9, the at least one bassinet accessory including a curtain (132) configured to cover at least one of the bassinet cavity or a portion of the bassinet located outside of the opening in the surface of the aircraft interior structure.

11. The aircraft interior structure of Claim 9, the at least one bassinet accessory including one or more visual devices (134) installed on or within one or more surfaces of the bassinet cavity.

12. The aircraft interior structure of Claim 11, the one or more visual devices including at least one of a light-generating device or a visual display.

13. The aircraft interior structure of Claim 9, the at least one bassinet accessory including one or more aural devices (136) installed on or within one or more surfaces of the bassinet cavity.

14. The aircraft interior structure of Claim 13, the one or more aural devices including at least one of an anechoic material or a sound-generating device.

15. An aircraft cabin, comprising:
a passenger compartment including an aircraft seat; and
the aircraft interior structure according to any preceding claim.
